Europäisches Patentamt

(19) European Patent Office

Office européen des brevets

(11) Numéro de publication : **0 054 329**
B1

# (12) FASCICULE DE BREVET EUROPÉEN

(45) Date de publication du fascicule du brevet :
28.08.85

(51) Int. Cl.⁴ : **H 04 B   3/23**

(21) Numéro de dépôt : 81201353.0

(22) Date de dépôt : 11.12.81

(54) **Annuleur d'écho pour transmission téléphonique par voies numériques mettant en œuvre une loi de codage pseudo-logarithmique.**

(30) Priorité : 17.12.80 FR 8026808

(43) Date de publication de la demande :
23.06.82 Bulletin 82/25

(45) Mention de la délivrance du brevet :
28.08.85 Bulletin 85/35

(84) Etats contractants désignés :
BE CH DE FR GB LI NL SE

(56) Documents cités :
US-A- 4 064 379
NATIONAL TELECOMMUNICATIONS CONFERENCE
1980, Conference Record, vol. 3, (Conférence tenue
du 30 novembre au 4 décembre 1980) NEW YORK
(US) E. McDEVITT : "A Microprocessor Based Adaptive Digital Echo Canceller", pages 56.4.1 - 56.4.4
IEEE TRANS ON COMMUNICATIONS, Vol. COM-26,
No. 5, May 1978 D.L. DUTTWEILER : "A twelve- Channel Digital Echo Canceller", pp. 647-653

(73) Titulaire : TELECOMMUNICATIONS RADIOELECTRI-
QUES ET TELEPHONIQUES T.R.T.
88, rue Brillat Savarin
F-75013 Paris (FR)

(72) Inventeur : Lassaux, Jean
Société Civile S.P.I.D. 209 rue de l'Université
F-75007 Paris (FR)

(74) Mandataire : Charpail, François et al
Société Civile S.P.I.D. 209, rue de l'Université
F-75007 Paris (FR)

EP 0 054 329 B1

Jouve, 18, rue St-Denis, 75001 Paris, France

## Description

L'invention concerne un annuleur d'écho inséré dans une liaison téléphonique à voies numériques à proximité d'une unité de raccordement dans le but d'annuler pratiquement, dans la voie numérique (que l'on appellera « voie d'émission ») qui achemine les mots numériques de codage d'échantillons de parole proche délivrés par l'unité de raccordement, l'effet de l'écho des mots numériques de codage d'échantillons de parole lointaine délivrés à ladite unité de raccordement par l'autre voie numérique (que l'on appelera « voie de réception »). L'unité de raccordement dessert une ligne d'abonné ou un circuit d'abonnés comprenant une pluralité de lignes d'abonnés. Elle inclut évidemment dans ce dernier cas les moyens nécessaires de multiplexage et de démultiplexage.

L'annuleur d'écho de l'invention est plus particulièrement destiné aux transmissions numériques MIC (ou PCM) qui mettent en œuvre une loi de codage pseudo-logarithmique (companding) telle que la loi A de l'avis G711 du CCITT (Comité Consultatif International Télégraphique ou Téléphonique) ou que la loi Mu 255.

On symbolisera dans ce qui suit par :

X : un mot quelconque de codage pseudo-logarithmique d'échantillon de parole lointaine acheminé par la voie de réception vers l'unité de raccordement,

S : un mot quelconque de codage pseudo-logarithmique d'échantillon de parole proche délivré par l'unité de raccordement.

On sait d'une façon générale que la présence dans l'unité de raccordement d'un ou d'une pluralité d'hybrides analogiques provoque une discontinuité d'impédance qui donne lieu au retour par la voie d'émission d'un écho Y des mots de codage X délivrés par la voie de réception à ladite unité de raccordement. Les mots de codage S délivrés par ladite unité à la voie d'émission comprennent donc en fait une composante de parole proche Z et une composante d'écho de parole lointaine Y. On sait aussi que l'écho devient gênant lorsque le temps de parcours des signaux atteint quelques dixièmes de seconde, quelle que soit la nature du support de transmission (conducteurs électriques ou fréquence hertzienne).

On sait enfin que, pour supprimer pratiquement l'écho, le procédé le plus efficace actuellement connu consiste à synthétiser, à partir de la réponse impulsionnelle du « chemin d'écho » (c'est-à-dire des constituants de l'unité de raccordement qui sont la source principale de l'écho), un signal compensateur d'écho constitué de mots $\bar{Y}$ dont chacun est combiné avec un mot S pour restituer un mot de codage R pratiquement identique au mot correspondant de parole proche Z. On remarque que l'on utilise ici l'expression « combiné avec » et non pas « retranché de ». Cette dernière expression serait exacte si les mots d'échantillons étaient des mots de codage linéaire. Lorsque la transmission met en œuvre une loi de codage non linéaire, l'opération à réaliser est plus complexe qu'une simple soustraction. L'annuleur d'écho de l'invention utilise ce procédé.

L'annuleur d'écho de l'invention, destiné comme on l'a dit aux liaisons MIC à loi de codage pseudo-logarithmique, est du genre comprenant :

— un premier registre à décalage d'une capacité de (k + 1) mots de codage, bouclé sur lui-même et dont l'entrée est connectée à la voir de réception pour recevoir à chaque instant d'échantillonnage un mot de codage pseudo-logarithmique X, la vitesse de circulation des mots dans le registre étant telle qu'il fournit entre deux instants d'échantillonnage, consécutifs, la séquence des k plus récents mots de codage X,

— un deuxième registre à décalage d'une capacité de k mots de codage, bouclé sur lui-même, fonctionnant en phase avec le premier registre et dans lequel circule une séquence de k mots C de codage de coefficients,

— des moyens de calcul numérique de convolution agencés pour fournir, à chaque instant d'échantillonnage, un mot de codage linéaire de compensation d'écho $\bar{y}$ obtenu par sommation de k mots dont chacun résulte d'une opération combinant un mot X et un mot C délivrés simultanément par le premier et le deuxième registre à décalage,

— des moyens de calcul numérique de soustraction comprenant un soustracteur dont une entrée est connectée à l'unité de raccordement par l'intermédiaire d'un transcodeur pseudo-logarithmique/linéaire, dont l'entrée de correction est connectée à la sortie desdits moyens de calcul numérique de convolution et dont enfin la sortie est connectée à la voie émission par l'intermédiaire d'un transcodeur linéaire/pseudo-logarithmique,

— des moyens de calcul numérique de corrélation munis d'entrées respectivement connectées à la sortie du premier et du deuxième registre à décalage et à la sortie dudit soustracteur et muni d'une sortie connectée à l'entrée du deuxième registre à décalage pour modifier la valeur des mots C circulant dans ce deuxième registre en fonction de critères de comparaison des mots fournis respectivement par ledit premier registre et par ledit soustracteur.

Les termes de « corrélation », « convolution », et « soustraction » sont ici employés par analogie. Ils ne seraient rigoureusement exacts que si les opérations qu'ils désignent s'appliquaient à des mots de codage linéaire. Les moyens de convolution délivreraient alors des mots $\bar{y}$ de compensation d'écho tels que :

$$\overline{y} = \sum_{i=0}^{k} (x(n - i) \cdot c(i)),$$

cette relation représentant le produit de convolution de deux polynômes de k termes, à savoir :

$$\Sigma_i^k = 0^{x(n-i)} \text{ et } \Sigma_i^k = 0^{c(i)},$$

les mots x étant des mots de codage linéaire résultant de la conversion des mots de codage pseudo-logarithmique X et les mots c résultant d'une conversion analogue des mots C.

Un annuleur d'écho opérant sur des mots de codage pseudo-logarithmique est décrit dans l'article de Donald L. Duttweiler intitulé « a twelve Channel Digital Echo Canceller » et publié dans « IEEE Transactions on Communications » vol. com. 26, n° 5, mai 1978, pages 647, 653. Mais on doit noter que dans cet annuleur d'écho, certains traitements sont effectués sur des mots de codage linéaire à virgule flottante, de sorte que cet annuleur d'écho utilise non seulement un transcodeur pseudo-logarithmique/linéaire et un transcodeur inverse, mais aussi des transcodeurs intermédiaires assurant la conversion des mots de codage pseudo-logarithmique en mots de codage linéaire à virgule flottante, des mots de codage linéaire à virgule flottante en mots de codage linéaire à virgule fixe et enfin des mots de codage linéaire à virgule fixe en mots de codage linéaire à virgule flottante. Par contre, l'annuleur d'écho du genre envisagé dans l'invention n'utilise dans les traitements que des mots de codage pseudo-logarithmique (en particulier, pour les coefficients de l'annuleur d'écho) et des mots de codage linéaire à virgule fixe, ce qui évite l'utilisation des transcodeurs intermédiaires précités qui accroissent la complexité et le coût du dispositif ainsi que le niveau de bruit. On doit noter par ailleurs que dans l'annuleur d'écho de l'article de Duttweiler, les risques d'instabilité de l'annuleur d'écho en présence de parole proche ne sont évités qu'en inhibant dans ce cas la correction des coefficients, ce qui suppose l'utilisation d'un détecteur de double parole généralement difficile à réaliser.

Dans le brevet américain n° 4 064 379, il est décrit un annuleur d'écho opérant sur des signaux analogiques dans les voies émission et réception, mais comportant des convertisseurs de signal analogique en signal numérique à codage pseudo-logarithmique (loi A) de façon que les moyens de convolution opèrent (comme dans l'annuleur d'écho envisagé dans l'invention) sur des mots de codage pseudo-logarithmique (mots du signal dans la voie réception et mots de coefficients). Mais, il faut remarquer que dans cet annuleur d'écho qui travaille pour annuler des échos de longue durée et qui utilise donc un grand nombre de coefficients (100 à 500), l'incrément de correction des coefficients a une valeur relativement importante afin de réduire à une valeur raisonnable le temps de convergence : la correction est effectuée sur le quatrième bit de la mantisse des coefficients, alors que trois bits de mantisse sont utilisés pour le calcul de convolution. Il en résulte forcément un problème de stabilité de l'annuleur d'écho qui est encore résolu à l'aide d'un détecteur de double parole inhibant la correction des coefficients en cas de double parole.

La présente invention vise à éviter ces inconvénients et fournit les moyens d'obtenir en même temps, pour un annuleur d'écho du genre envisagé ci-dessus, une convergence rapide et une stabilité complète en évitant l'utilisation d'un détecteur de double parole.

Conformément à l'invention, des moyens sont prévus et mis en œuvre lors de l'établissement d'une communication impliquant l'unité de raccordement pour initialiser les mots de codage pseudo-logarithmique C stockés dans le deuxième registre à décalage, en appliquant à la voie de réception une impulsion d'un niveau prédéterminé et en dirigeant à l'entrée de ce deuxième registre les k premiers mots d'écho en résultant en provenance de l'unité de raccordement, lesdits moyens de calcul numérique de corrélation étant agencés pour modifier ensuite lesdits mots C par un terme de correction portant sur un bit de mantisse de ces mots C ayant un poids suffisamment faible pour que la stabilité de l'annuleur d'écho soit assurée dans une circonstance de double parole, le deuxième registre à décalage étant prévu pour stocker des mots C ayant des bits de mantisse allant jusqu'au bit de correction.

La description suivante en regard des dessins annexés, le tout donné à titre d'exemple fera bien comprendre comment l'invention peut être réalisée :

la figure 1 est un schéma sommaire montrant la position de l'annuleur d'écho dans une liaison numérique ne desservant qu'un seul abonné,

la figure 2 est un schéma sommaire montrant la position de l'annuleur d'écho dans une liaison numérique desservant une pluralité d'abonnés,

la figure 3 est un diagramme rappelant les caractéristiques de la loi A de codage pseudo-logarithmique,

la figure 4 est un tableau complétant le diagramme de la figure 3,

la figure 5 est un tableau relatif à l'écriture des mots de codage linéaire délivrés par le transcodeur pseudo-logarithmique/linéaire des moyens de convolution,

la figure 6 est un schéma général, sous la forme d'un diagramme de blocs, dudit exemple de réalisation de l'annuleur d'écho de l'invention,

3

**0 054 329**

la figure 7 est un schéma, sous la forme d'un diagramme de blocs, des moyens de convolution et de soustraction dudit exemple de réalisation,

la figure 8 est un schéma, sous la forme d'un diagramme de blocs, des moyens de corrélation dudit exemple de réalisation.

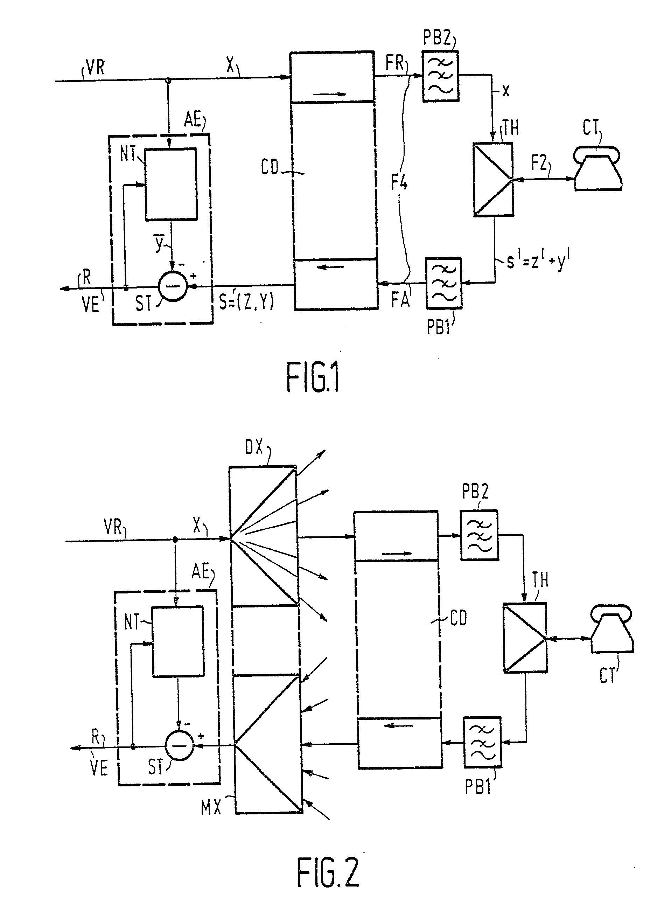

On considère d'abord la figure 1. L'unité de raccordement, destinée à connecter à la voie numérique d'émission VE et à la voie numérique de réception VR une installation d'abonné symbolisée par un combiné téléphonique CT comprend comme à l'accoutumée :

— un transformateur hybride TH assurant la connexion de la ligne analogique deux fils F2 (liaison de l'installation d'abonné CT) à la ligne analogique quatre fils F4 et

— un codec (codeur-décodeur) CD dont il est inutile de rappeler la constitution ; ce codec est connecté à la sortie de l'hybride TH par les fils « aller » (FA) de la liaison F4 et par l'intermédiaire d'un filtre passe-bas PB1 ; il est connecté à l'entrée hybride TH par les fils « retour » (FR) de la liaison F4 et par l'intermédiaire d'un filtre passe-bas PB2.

La liaison numérique est représentée par la voie numérique dite « d'émission » VE à laquelle le codec CD délivre le signal numérique S résultant du codage pseudo-logarithmique du signal analogique délivré par les fils FA et par la voie numérique dite « de réception » VR qui achemine le signal numérique de codage pseudo-logarithmique X que le codec CD transforme en signal analogique x délivré aux fils FR.

L'unité de raccordement retransmet par la voie numérique d'émission le signal S qui résulte de la combinaison du signal de parole proche Z en provenance de l'installation CT et du signal d'écho Y. A proprement parler, cette combinaison n'est pas une addition puisque le signal S résulte de la transcription en mots de codage pseudologarithmique du signal analogique s' délivré par l'hybride TH. C'est en fait ce signal s' qui est la somme d'un signal analogique de parole z' et d'un signal analogique d'écho y'.

L'annuleur d'écho AE de l'invention agit comme les autres annuleurs d'écho du genre connu précité. Son rôle est d'élaborer à partir des signaux numériques X et S un signal numérique R qui est délivré à la voie d'émission VE et qui est une transcription aussi fidèle que possible du signal analogique de parole z' non affecté par le signal analogique d'écho y'. Il peut donc être considéré comme constitué par un filtre numérique transversal NT élaborant à partir des signaux numériques R et X un signal $\bar{Y}$ de compensation d'écho et par un soustracteur numérique ST retranchant ce signal $\bar{Y}$ du signal S. On répète que, dans la réalité, le « soustracteur » ST ne soustrait pas à proprement parler le signal $\bar{Y}$ du signal S en raison du mode de codage adopté.

On a considéré jusqu'ici le cas du raccordement d'une installation d'abonné CT à la liaison numérique. La figure 2 concerne le cas du raccordement d'une pluralité d'installations telles que CT. On y retrouve tous les éléments de la figure 1. Mais la voie numérique d'émission VE est connectée au codec CD au moyen d'un multiplexeur MX qui assure également la connexion aux codeurs-décodeurs d'autres installations d'abonnés non représentées, tandis que la connexion de la voie numérique de réception VR est assurée par un démultiplexeur DX dont les sorties sont connectées au codec CD et aux autres codeurs-décodeurs. L'annuleur d'écho AE est alors connecté d'une part entre la voie VR et l'entrée du démultiplexeur DX et d'autre part entre la sortie du multiplexeur MX et la voie VE.

Qu'il assure le traitement de signaux numériques simples (cas de la figure 1) ou de signaux numériques multiplex (cas de la figure 2), on verra que le schéma général de l'annuleur d'écho de l'invention demeure inchangé. Les différences résident seulement dans les caractéristiques fonctionnelles des composants et notamment dans leur vitesse de fonctionnement.

En prenant à titre d'exemple l'application à des liaisons numériques aux normes européennes :

dans le premier cas, le débit des signaux numériques à traiter sera de 64 kilobauds (8 kilo-octets), dans le second cas, le débit maximal sera de 2,048 megabauds (32 canaux de 8 kilo-octets chacun).

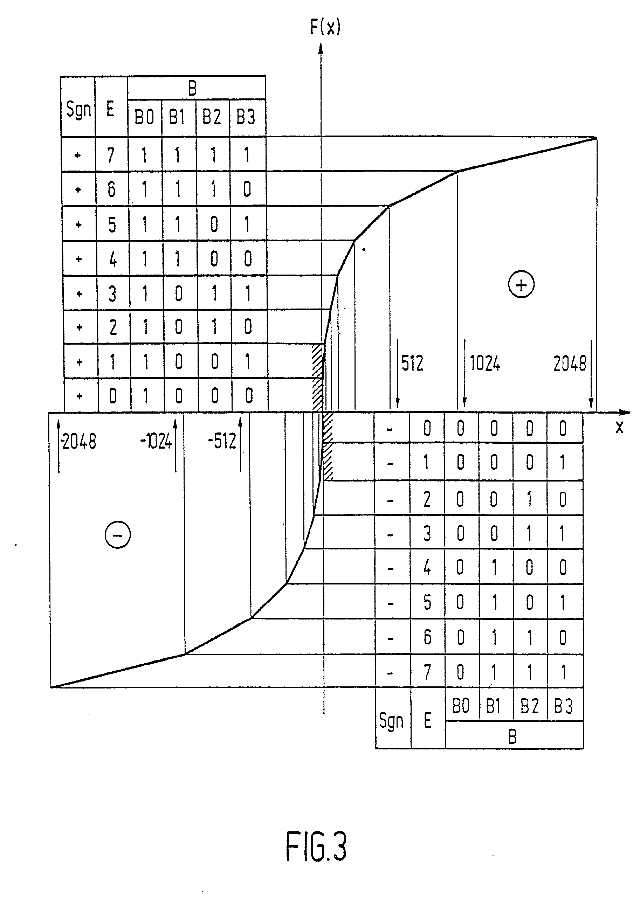

On considère maintenant la figure 3 qui donne pour mémoire le diagramme de codage des amplitudes selon la loi A des recommandations du CCITT. L'exemple de réalisation de l'annuleur d'écho que l'on décrira plus loin s'applique en effet au traitement de mots de codage pseudo-logarithmique selon cette loi A. On rappelle cependant que l'invention s'applique également si la loi de codage est différente, à condition évidemment qu'il s'agisse d'un codage pseudo-logarithmique.

Dans la figure 3, l'amplitude analogique à coder est portée en abscisses et le résultat du codage (companding) en ordonnées. La courbe de codage résulte, au-desus et au-dessous de l'axe des abscisses, de l'assemblage de deux portions de courbes, à savoir, |x| étant la valeur absolue de l'amplitude x à coder, Sgn(x) le signe et A une constante (A = 87,6) :

— pour $1/A \leqslant |x| \leqslant 1$, l'approximation linéaire (au moyen de six segments) de la fonction logarithmique :

$$F(x) = \text{Sgn}(x) \cdot (1 + \log(A \cdot |x|))/(1 + \log A),$$

— pour $0 \leqslant |x| \leqslant 1/A$, la fonction linéaire :

$$F(x) = \text{Sgn}(x) \cdot A \cdot |x|/(1 + \log A).$$

4

On constate que le diagramme est symmétrique par rapport à l'origine et que les points de raccordement entre les deux portions de courbes ont pour coordonnées, en valeur absolue :

$$|x| = 1/A \text{ et } |F(x)| = 1$$

Le diagramme de la figure 3 montre en outre deux tableaux dans lesquels chaque rangée correspond à un segment de la courbe F(x). Dans chaque rangée on indique le signe Sgn et le numéro E du segment et en outre le codage du signe Sgn (bit de plus fort poids BO) et le codage du numéro E (bits B1, B2, B3). Les mots de codage pseudo-logarithmique comportant 8 bits (1 byte), ces tableaux ne sont pas complets. Les 4 bits restants (B4, B5, B6, B7) sont utilisés pour le codage de la position à l'intérieur d'un segment déterminé.

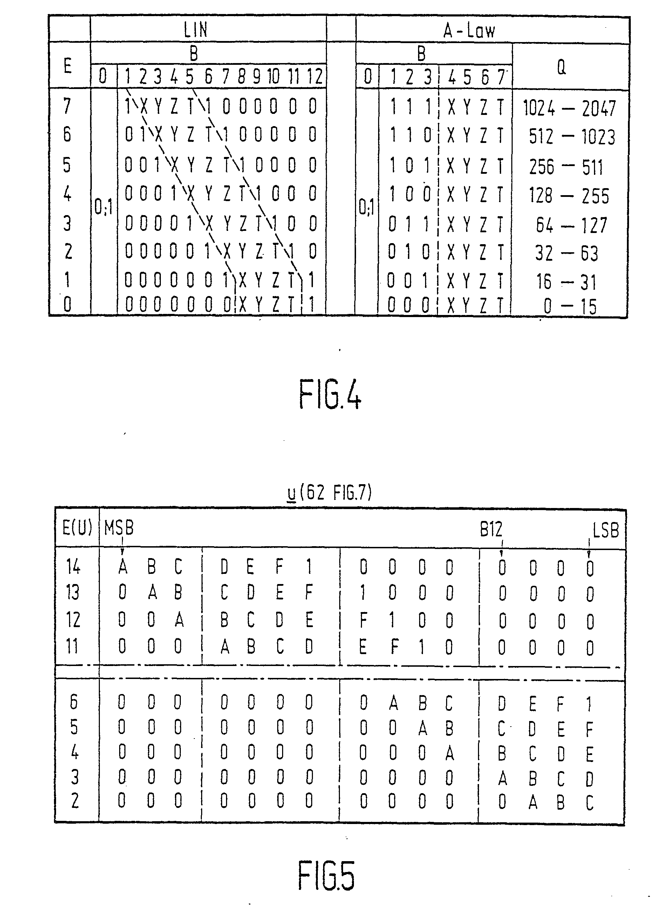

Le tableau de la figure 4 précise le mode de codage en ce qui concerne la position à l'intérieur d'un segment. La représentation binaire de cette position est appelée « mantisse » par analogie avec un codage réellement logarithmique. La partie de droite du tableau concerne la représentation binaire selon la loi A et la partie de gauche concerne la représentation binaire selon un code linéaire qui serait nécessaire en l'absence de compression (companding) pseudo-logarithmique. Dans le tableau, la première colonne indique le numéro E de segment ; la deuxième colonne indique les 13 bits de la représentation linéaire avec un bit de signe (bit B0) et 12 bits d'amplitude (bits B1-B12) ; la troisième colonne indique la représentation selon la loi A avec un bit de signe (bit B0), trois bits de segment pour le codage du numéro E de segment (bits B1, B2, B3) et quatre bits de mantisse pour le codage de la position à l'intérieur d'un segment déterminé (bits B4, B5, B6, B7) ; enfin la quatrième colonne indique le domaine de quantification Q du signal de sortie. Les bits de valeur X, Y, Z, T sur la partie gauche du tableau constituent les bits de mantisse de la partie droite. D'après ce tableau, on voit que le codage pseudo-logarithmique permet de représenter avec seulement 8 bits un domaine de niveaux dont la représentation exigerait 13 bits en codage linéaire.

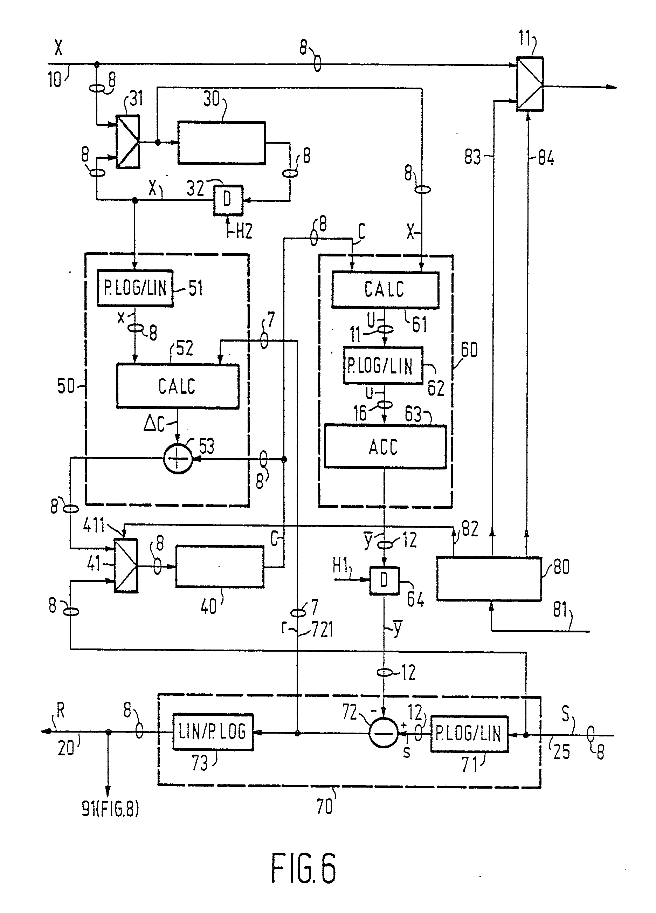

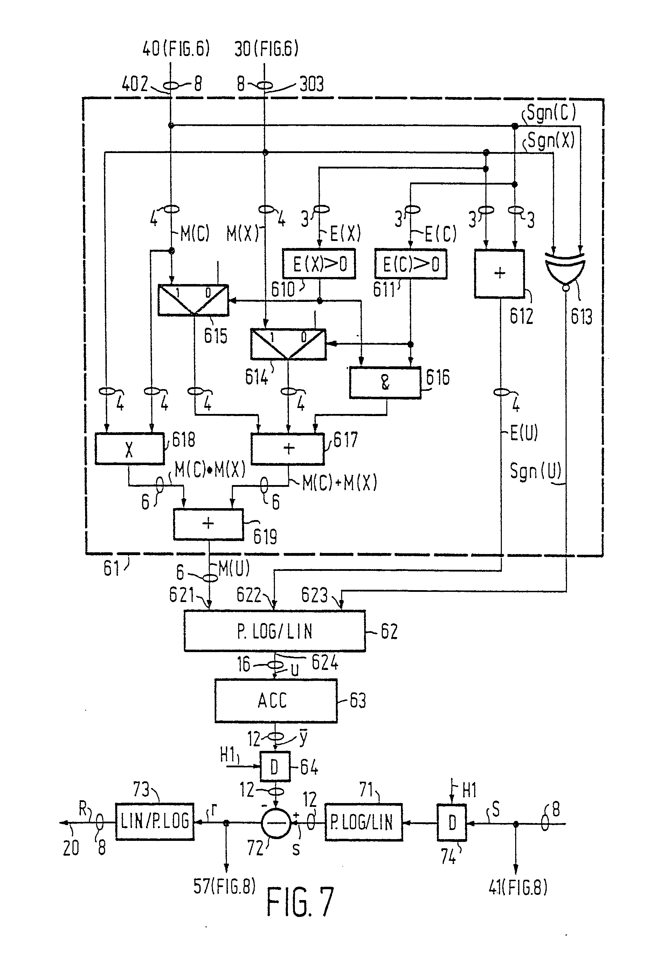

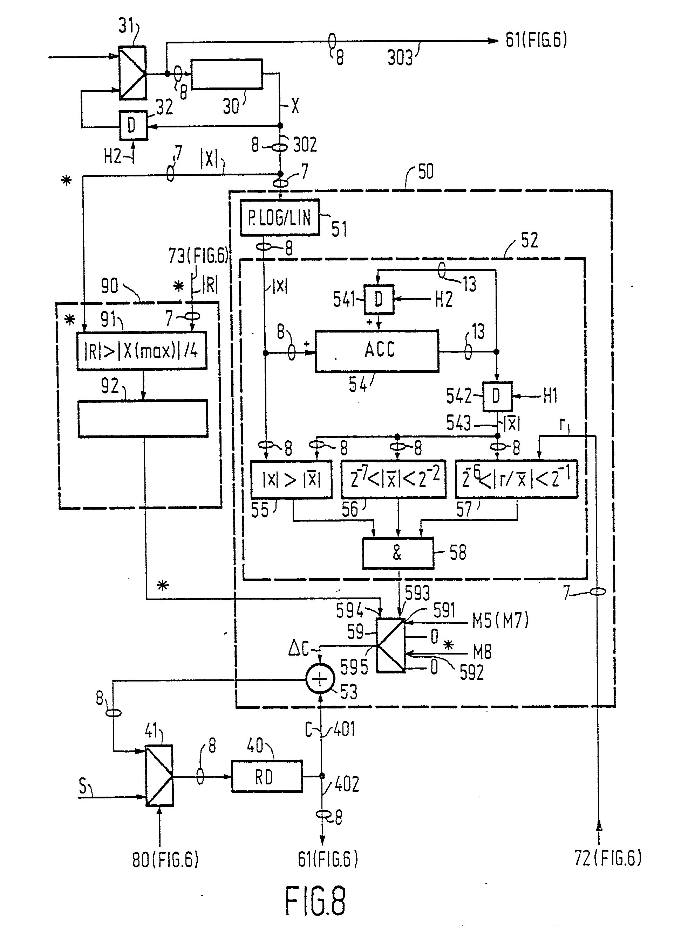

On considère maintenant la figure 6 dont on rappelle qu'elle est un schéma général, sous la forme d'un diagramme de blocs, d'un exemple de réalisation de l'annuleur d'écho de l'invention. Par mesure de simplification, on ne précisera pas, ni dans ce schéma, ni dans les schémas des figures suivantes, si les liaisons internes sont des liaisons « parallèles » ou des liaisons « séries ». Cependant, quel que soit le type de la liaison, si le nombre de bits des mots numériques que celle-ci achemine est supérieur à 1, elle est entourée d'un petit cercle accompagné de son nombre de bits.

On retrouve dans la figure 6 les moyens de calcul numérique, registres et liaisons déjà évoqués dans la définition générale de l'annuleur d'écho de l'invention, à savoir :

— la liaison de voie de réception 10, acheminant les mots de codage pseudo-logarithmique de parole lointaine X,

— la liaison de voie d'émission 20, transmettant les mots de codage pseudo-logarithmique de parole proche R,

— la liaison 25 de sortie de l'installation de raccordement (sortie de codec ou sortie de multiplexeur) qui délivre les signaux numériques de parole proche affectés de l'écho à éliminer,

— le premier registre à décalage 30 (circulation des mots d'échantillon X) et le deuxième registre à décalage 40 (circulation des mots de coefficients C),

— les moyens de calcul numérique de corrélation 50,

— les moyens de calcul numérique de convolution 60,

— les moyens de calcul numérique de soustraction 70 et

— Une unité de commande 80 dont le rôle sera spécifié plus loin.

Avant de poursuivre la description du schéma de la figure 6, on va préciser la nature des opérations mise en œuvre dans l'annuleur d'écho de l'invention.

A tout instant (n · T) quelconque (T étant la période d'échantillonnage des signaux à transmettre et n l'ordre d'apparition de cet instant), et en raison de la réponse impulsionnelle du chemin d'écho, on pourrait écrire, si la transmission mettait en œuvre une loi de codage linéaire :

$$s(n) = z(n) + x(n) * c(n) = z(n) + y(n),$$

relation dans laquelle s(n) est le signal de parole délivré à la liaison par l'unité de raccordement et affecté de l'effet d'écho, z(n) est le signal pur de parole proche, x(n) le signal de parole lointaine, c(n) la réponse impulsionnelle du chemin d'écho, * le symbole représentant une convolution et y(n) l'écho. La fonction de l'annuleur d'écho serait alors, à la manière connue :

a) d'élaborer un signal ȳ(n) de compensation d'écho tel que (une parenthèse représente toujours indice et non pas un produit) :

$$\bar{y}(n) = x(n - k) \cdot c(k) + x(n - k - 1) \cdot c(k-1) + \dots x(n - 1) \cdot c(1)$$

b) de calculer r(n) tel que :

5

0 054 329

$$r(n) = s(n) - \bar{y}(n).$$

Dans ces relations, k est un nombre de termes suffisant pour simuler l'écho y(n) avec une précision suffisante, x(n − k) est le signal de parole lointaine à l'instant (n − k) · T et c(k) est le poids affecté à ce signal dans le polynône de calcul $\bar{y}(n)$.

On pourrait aussi écrire, d'une manière plus condensée :

$$\bar{y}(n) = \sum_{j=1}^{k} (x(n - j) \cdot c(j)).$$

Du fait que le codage mis en œuvre n'est pas linéaire, on sera amené, dans l'annuleur d'écho de l'invention, à calculer les correspondances :

$$S \rightarrow s, Z \rightarrow z, X \rightarrow x, \text{etc.}$$

dans lesquelles les majuscules représentent un mot de codage pseudo-logarithmique (débarrassé de son indice) et les minuscules un mot de codage linéaire.

L'invention permet de calculer ces correspondances avec un maximum de simplicité et un minimum de moyens. On verra qu'elle tire notamment parti de la constatation qu'il est inutile de calculer la correspondance : C → c, dans laquelle C est un poids exprimé par un mot de codage pseudo-logarithmique et c le mot de codage linéaire correspondant.

On reprend maintenant la description du schéma de la figure 6. On précise ou on rappelle :

— que les mots de transmission sont codés selon la loi A,

— que la cadence d'échantillonnage est de 8 kHz, c'est-à-dire que l'unité de raccordement dessert une seule installation d'abonné.

On remarque dans la figure 6, ainsi que dans les figures 7 et 8, la présence de bascules de type D qui symbolisent en fait des ensembles de bascules si les liaisons qui les desservent sont des liaisons parallèles. Les valeurs des fréquences de synchronisation sont symbolisées par H1 ou H2. La fréquence H1 qui règle la synchronisation des mots traités par les organes de calcul est de 8 kHz. La fréquence H2 règle la vitesse de circulation des mots pour le calcul de sommes ou de moyennes d'échantillons. Les calculs et les essais de simulation ayant montré que 32 échantillons suffisent (k = 32) pour obtenir une reconstitution du signal d'écho, la valeur de cette fréquence est :

$$H2 = H1 \cdot k = 256 \text{ kHz.}$$

On ne traitera pas, sauf exception, des conditions de convergence des termes du polynôme de calcul du signal de compensation d'écho. La détermination est en effet à la portée d'un spécialiste.

La capacité du registre 30 est donc de (k + 1) = 33 mots de 8 bits. L'entrée de ce registre est connectée à la sortie d'un multiplexeur 31. Les entrées de celui-ci sont connectées d'une part à la liaison 10 et d'autre part à la sortie du registre 30. Cette dernière connexion est réalisée par l'intermédiaire de la bascule 32 synchronisée à la fréquence H2. A chaque période d'échantillonnage (c'est-à-dire toutes les 125 microsecondes) le multiplexeur 31 introduit dans le registre 30 le nouveau mot d'échantillon X acheminé par la liaison 10. Ce nouveau mot prend place dans la séquence qui circule dans le registre 30 à la cadence de 256 kilo-octets par seconde et remplace le plus ancien.

Chaque mot de sortie X du registre 30 est acheminé par une liaison à 8 bits, d'une part vers l'entrée des moyens de corrélation 50, d'autre part vers les moyens de convolution 60.

Les moyens de corrélation 50 sont décrits plus en détail en référence à la figure 7. On précise cependant dès maintenant qu'ils comprennent :

— un transcodeur pseudo-logarithmique linéaire 51 dont l'entrée est connectée à la sortie de la bascule 32 et dont la sortie restitue des mots de codage linéaire x dont chacun résulte de la transcription d'un mot de codage pseudo-logarithmique X ;

— un calculateur-comparateur 52 ayant une entrée connectée à la sortie du transcodeur 51 et une entrée connectée à la sortie du soustracteur 72 des moyens de soustraction 70 (voir plus loin) ; il reçoit par cette dernière entrée les bits les plus significatifs des mots r de codage linéaire délivrés par ledit soustracteur et calcule, en fonction de critères qui seront définis plus loin, des termes de correction ΔC positifs, négatifs ou nuls ;

— enfin un additionneur 53 dont les entrées sont connectées à la sortie du registre 40 et à la sortie du calculateur-comparateur 52 ; sa sortie est connectée à l'entrée de ce registre 40 par l'intermédiaire d'un multiplexeur 41.

Le registre 40 est un registre à décalage d'une capacité de k = 32 mots. Il y circule donc en permanence une séquence de 32 termes C donc chacun est, s'il y a lieu, corrigé à son passage dans l'additionneur 53. Le multiplexeur 41 est utilisé pour l'initialisation lors de l'établissement d'une communication. On précisera son fonctionnement plus loin.

Les moyens de convolution 60 comprennent :

6

— un calculateur 61 à deux entrées connectées respectivement à la sortie du multiplexeur 31 (mots X) et à la sortie du registre 40 (mots C) et délivrant une succession de mots de codage pseudo-logarithmique U dont chacun résulte de la combinaison du mot X et du mot C reçus simultanément ;

— un transcodeur pseudo-logarithmique/linéaire 62 dont l'entrée est connectée à la sortie du calculateur 61 et dont la sortie délivre des mots de codage linéaire u dont chacun résulte de la transcription d'un mot U et

— un accumulateur-additionneur 63 dont l'entrée est connectée à la sortie du transcodeur 62 et dont la sortie délivre des mots de codage linéaire ȳ dont chacun résulte de la sommation des k plus récents mots u délivrés par ce transcodeur.

Quant aux moyens de soustraction 70, ils comprennent :

— un transcodeur pseudo-logarithmique/linéaire dont l'entrée est connectée à la sortie de l'unité de raccordement (liaison 25) et qui transcrit chaque mot de codage pseudo-logarithmique S délivré par ladite sortie en un mot de codage linéaire s ;

— un soustracteur 72 dont l'entrée (+) est connectée à la sortie du transcodeur 71 et dont l'entrée (−) est connectée à la sortie de l'accumulateur-additionneur 63 par l'intermédiaire de la bascule 64 synchronisée à la fréquence H1 ;

— enfin un transcodeur linéaire/pseudo-logarithmique 73 connecté à la sortie du soustracteur 72 et qui transcrit les mots r de codage linéaire délivrés par celui-ci en mots R de codage pseudo-logarithmique délivrés à la voie d'émission 20.

L'unité de commande 80 comporte entre autres :

— une entrée connectée au poste d'abonné (non représenté) par une liaison 81,

— une sortie connectée par une liaison 82 à l'entrée de commande 411 du multiplexeur 41 qui comporte, outre l'entrée de signal connectée à la sortie de l'additionneur 53, une autre entrée de signal connectée à la liaison 25 (mots S),

— une sortie connectée par une liaison 83 à une entrée de signal d'un multiplexeur 11 et

— une sortie connectée par une liaison 84 à l'entrée de commande du même multiplexeur.

Avant d'aborder, en référence aux figures 7 et 8, une description plus détaillée des circuits des moyens de corrélation 50, de convolution 60 et de soustraction 70, il est utile de donner quelques indications complémentaires sur les fonctions de ces moyens.

Le multiplexeur 41 met normalement en communication la sortie de l'additionneur 53 et le registre à décalage 40. Le multiplexeur 11 met normalement en communication la voie de réception 10 avec l'unité de raccordement. Lorsque l'unité de commande 80 est informée par la liaison 81 de l'établissement d'une communication impliquant l'unité de raccordement (signal binaire provenant de la détection de la boucle de l'abonné), elle délivre momentanément et simultanément :

— par la liaison 82, à l'entrée de commande 411 du multiplexeur 41, l'ordre de connecter la liaison 25 (sortie de l'unité de raccordement) à l'entrée du registre 40,

— par la liaison 84, à l'entrée de commande du multiplexeur 11, l'ordre de connecter la liaison 83 à l'entrée de l'unité de raccordement,

— enfin, par la liaison 83, une impulsion de valeur unité.

A ce moment précis les premiers échantillons S délivrés au multiplexeur 41 et par conséquent au registre 40 représentent la réponse impulsionnelle du chemin d'écho et constituent les premiers mots de coefficient C qui circulent dans le registre 40 et que les moyens de convolution 60 combinent deux à deux avec les premiers mots d'échantillons X délivrés par le registre 30 pour élaborer les premiers mots ȳ de compensation d'écho.

Les mots de coefficients C sont des mots de codage pseudo-logarithmique qui comprennent, tout comme les mots d'échantillons X, un bit de signe, trois bits de codage de numéro de segment et quatre bits de codage de mantisse.

Le multiplexeur 11 ayant rétabli la connexion de la ligne 10 avec l'entrée de l'unité de raccordement et le multiplexeur 41 ayant rétabli la connexion de la sortie de l'additionneur 53 avec l'entrée du registre 40, le calculateur 61 réalise pour chaque couple de mots C et X l'opération :

$$U = C * X$$

que l'on définira avec précision plus loin.

Chaque mot U délivré par le calculateur 61 est un mot de codage pseudo-logarithmique que le transcodeur 62 transcrit en un mot u de codage linéaire. Quant à l'accumulateur-additionneur 63, il délivre à tout instant $(n \cdot T)$ un mot de codage linéaire ȳ qui est la somme des k plus récents mots u.

En ce qui concerne les moyens de soustraction 70 :

— le transcodeur 71 transcrit chaque mot de codage pseudo-logarithmique S délivré par la liaison 25 en un mot de codage linéaire s,

— le soustracteur 72 soustrait du mot s le mot ȳ délivré au même instant,

— chaque mot de codage linéaire $r = s - ȳ$ délivré par le soustracteur 72 est transcrit par le transcodeur 73 en un mot de codage pseudo-logarithmique R délivré à la voie d'émission 20.

Chaque mot r est délivré aussi par la liaison 721, au calculateur-comparateur 52. Celui-ci, que l'on décrira plus loin, et qui reçoit aussi les mots x, réalise des comparaisons selon les résultats desquelles il

7

peut ajouter ou retrancher au moyen de l'additionneur 53 un mot de correction ΔC aux mots C qui circulent dans le registre 40, ou encore ne rien changer à la valeur desdits mots C. A l'issue de chaque correction, le nouveau coefficient C obtenu remplace à l'entrée du multiplexeur 41 l'ancien mot C qui était délivré par le registre 40. Les mots C et ΔC sont des mots de codage pseudo-logarithmique.

Avant de considérer la figure 7 relative à la constitution des moyens de convolution 60 et des moyens de soustraction 70, on va donner quelques indications sur les calculs effectués par le calculateur 61 qui combine deux à deux, au fur et à mesure de leur apparition à ses entrées, un mot C et un mot X pour élaborer un mot U.

On convient d'appeler :

$A(X)$, $A(C)$ et $A(U)$ les amplitudes représentées par les mots X, C et U ;

$E(X)$, $E(C)$ et $E(U)$ les numéros de segments de codage correspondants ;

$M(X)$, $M(C)$ et $M(U)$ les valeurs de mantisses correspondantes.

Si l'on confère par convention la valeur unité au bit de rang 8 de la représentation linéaire des amplitudes (figure 4), on peut écrire :

si $E(C) \neq 0 : A(C) = 2 \exp(E(C)) \cdot (1 + M(C))$
si $E(C) = 0 : A(C) = 2 \cdot M(C)$
si $E(X) \neq 0 : A(X) = 2 \exp(E(X)) \cdot (1 + M(X))$
si $E(X) = 0 : A(X) = 2 \cdot M(X)$

Pour que chaque mot U délivré par le calculateur 61 soit tel que $A(U) = A(C) \cdot A(X)$, ce calculateur doit distinguer quatre cas puisque le calcul montre que l'on a :

a) si $E(C) = E(X) = 0$, $M(U) = M(C) \cdot M(X)$ et $E(U) = 2$ avec $0 < M(U) < 1$ ;
b) si $E(C) = 0$ et $E(X) \neq 0$, $M(U) = M(C) \cdot (1 + M(X))$ et $E(U) = E(X) + 1$ avec $0 < M(U) < 2$ ;
c) si $E(C) \neq 0$ et $E(X) = 0$, $M(U) = (1 + M(C)) \cdot M(X)$ et $E(U) = E(C) + 1$ avec $0 < M(U) < 2$ ;
d) si $E(C) \neq 0$ et $E(X) \neq 0$ $M(U) = (1 + M(C) + M(C) \cdot M(X))$ et $E(U) = E(C) + E(X)$ avec $0 < M(U) < 4$.

Il faut donc en principe, pour écrire M(U) en réservant 4 bits à la partie fractionnaire : 4 bits dans le cas a), 5 bits dans les cas b) et c) et 6 bits dans le cas d).

On considère maintenant la figure 7. Le calculateur 61 des moyens de convolution 60 (figure 6) comprend deux détecteurs de seuil 610 et 611, un additionneur 612, une porte NON (OU exclusif) 613, deux multiplexeurs 614 et 615, une porte ET 616, un multiplieur 618 et deux autres additionneurs 617 et 619. Les connexions de ces différents éléments et leurs fonctions sont organisées ainsi :

— détecteur de seuil 610 : une entrée à 3 bits recevant les bits de numéro de segment E(X) acheminés par la liaison à 8 bits 303 (sortie du registre 30 de la figure 6), une sortie à 1 bit délivrant un signal de validation si E(X) est plus grand que 0 ;

— détecteur de seuil 611 : une entrée à 3 bits recevant les bits de numéro de segments E(C) acheminés par la liaison à 8 bits 402 (sortie du registre 40), une sortie à 1 bit délivrant un signal de validation si E(C) est plus grand que 0 ;

— additionneur 612 : deux entrées à 3 bits respectivement connectées de la même façon que les entrées des détecteurs de seuil 610 et 611, une sortie à 4 bits délivrant le numéro de segment $E(U) = E(C) + E(X)$ ;

— porte 613 : deux entrées à 1 bit recevant respectivement les bits de signe Sgn(X) et Sgn(C) acheminés par les liaisons 303 et 402, une sortie à 1 bit délivrant la valeur 1 si Sgn(X) = Sgn(C) = 1, c'est-à-dire si Sgn(U) = 1 et la valeur 0 si Sgn(X) ou Sgn(C) = 0 ;

— multiplexeur 614 : une entrée de signal à 4 bits connectée à la liaison 303 pour en recevoir les bits de mantisse M(X), une entrée de validation connectée à la sortie du détecteur 611, une sortie à 4 bits retransmettant la valeur M(X) seulement si le détecteur 611 délivre son signal de validation et retransmettant la valeur 0 dans le cas contraire ;

— multiplexeur 615 : une entrée de signal à 4 bits connectée à la liaison 402 pour en recevoir les bits de mantisse M(C), une entrée de validation connectée à la sortie du détecteur 610, une sortie à 4 bits retransmettant la valeur M(C) seulement si le détecteur 610 délivre son signal de validation et retransmettant la valeur 0 dans le cas contraire ;

— porte ET 616 : deux entrées à 1 bit respectivement connectées aux sorties des détecteurs 610 et 611, une sortie à 1 bit délivrant la valeur logique 1 si les deux détecteurs délivrent simultanément leur signal de validation ;

— additionneur 617 : trois entrées respectivement connectées aux sorties du multiplexeur 614, du multiplexeur 615 et de la porte 616, une sortie à 6 bits délivrant la somme des valeurs respectivement délivrées par ces trois éléments ;

— multiplieur 618 : deux entrées à 4 bits respectivement connectées aux liaisons 303 et 402 pour en recevoir les valeurs de mantisse M(X) et M(C), une sortie à 6 bits délivrant la valeur du produit $M(C) \cdot M(X)$ ; enfin

— additionneur 619 : deux entrées à 6 bits connectées respectivement à la sortie du multiplieur 618 (valeur de M(C) · M(X) et à la sortie de l'additionneur 617 (s'il y a lieu, valeur de M(C) + M(X)), une sortie à 6 bits délivrant la valeur M(U).

Le multiplieur 618 peut être constitué par une simple table de correspondance (mémoire à lecture seule).

La description ci-dessus du calculateur 61 permet de vérifier qu'il réalise effectivement les calculs des cas a), b), c) et d) précités.

Outre le calculateur 61, les moyens de convolution 60 comprennent :
— le transcodeur pseudo-logarithmique/linéaire 62 et l'accumulateur-additionneur 63.

Le transcodeur 62 a les entrées suivantes :
— entrée 621 à 6 bits connectée à la sortie de l'additionneur 619 (valeur de mantisse M(U)) ;
— entrée 622 à 4 bits connectée à la sortie de l'additionneur 612 (numéro de segment E(T)) ;
— entrée 623 connectée à la sortie de la porte 613 (valeur du signe Sgn(U)).

Il restitue par sa sortie 624 à 16 bits la valeur du produit u = x · c, x étant le mot de codage linéaire résultant de la transcription de chaque mot X délivré par le registre 30 (figure 6) et c étant le mot de codage linéaire résultant de la transcription de chaque mot C délivré par le registre 40.

Ce transcodeur 62 peut être constitué par une table de correspondance (mémoire à lecture seule ou réseau logique programmable du genre connu par exemple sous le sigle FPLA).

Le tableau partiel de la figure 5 illustre le code des mots u. Il s'agit d'un code linéaire de 16 bits avec complément à 2. Les bits A, B, C, D, E, F sont les bits de mantisses reçus de l'additionneur 619. Le bit de signe n'est pas reporté. La première colonne indique le numéro de segment E(U) codé au moyen des 4 bits qui précèdent le bit A et qui sont tous fixés à la valeur 0 dans le tableau. Pour obtenir des nombres signés, il suffit de complémenter à 2 les nombres binaires figurant dans le tableau lorsque le bit de signe (non représenté) désigne un nombre négatif.

Quant à l'accumulateur-additionneur 63 dont l'entrée à 16 bits est connectée à la sortie du transcodeur 62, il délivre à l'entrée (—) du soustracteur 72, par l'intermédiaire de la bascule 63 rythmée à la cadence H1 (cadence d'échantillonnage), une succession de mots ȳ dont chacun résulte de la sommation des k plus récents mots u délivrés par ledit transcodeur. Autrement dit, à tout instant (n · T) :

$$\overline{y}(n) = \sum_{i=0}^{31} (x(n-i) \cdot c(i)).$$

Ces mots ȳ étant des mots de codage linéaire peuvent être soustraits par le soustracteur 72 des mots de codage linéaire s qui résultent de la transcription par le transcodeur 71 des mots de codage pseudo-logarithmique S transmis par l'intermédiaire de la bascule 74 rythmée elle aussi à la cadence H1. Le résultat, comme on l'a déjà dit, est une succession de mots de codage linéaire r que le transcodeur 73 transcrit en mots de codage pseudo-logarithmique R délivrés à la voie d'émission 20.

Les mots ȳ délivrés par l'accumulateur-additionneur 63 sont arrondis à 12 bits (voir tableau n° 5 le bit n° 12). Les mots s délivrés par le transcodeur 71 sont également 12 bits ainsi que les mots r délivrés par le soustracteur 72. Le transcodeur 73 qui délivre les mots R rétablit le codage MIC loi A à 8 bits.

On considère maitenant la figure 8 dont on rappelle qu'elle est relative aux moyens de corrélation 50 (figure 6) et notamment au correcteur 52 qui délivre éventuellement des termes de correction ΔC de signe convenable que l'additionneur 53 ajoute ou retranche s'il y a lieu aux mots de coefficients C qui circulent dans le multiplexeur 41 et dans le registre à décalage 80.

La figure 8 montre également un circuit détecteur de double parole 90 que l'on décrira plus loin. On verra qu'il peut être supprimé. C'est pourquoi il est signalé par un astérisque ainsi que les liaisons qui sont inutiles en son absence.

On précise d'abord que l'entrée du transcodeur 51 qui reçoit de la sortie du registre 30 les mots de codage pesudo-logarithmique X ne reçoit pas le bit de signe. C'est donc une entrée à 7 bits. Les mots de codage linéaire |x| que délivre ce transcodeur sont des mots de valeur absolue arrondie à 8 bits.

Les circuits qui constituent le correcteur 52 (figure 6) sont un accumulateur-additionneur 54, trois comparateurs détecteurs de niveau 55, 56 et 57, une porte ET 51 et un multiplexeur 59. Leurs connexions sont organisées ainsi :
— accumulateur-additionneur 54 : une entrée à 8 bits connectée à la sortie du transcodeur 51, une entrée à 13 bits bouclée sur une sortie à 13 bits par l'intermédiaire d'une bascule 541 de type D synchronisée à la cadence H2 d'arrivée des mots |x| ; sa sortie est également connectée à une liaison 543 à 8 bits par l'intermédiaire d'une bascule 542 de type D synchronisée à la cadence H2 ;
— détecteur-comparateur de niveau 56, doté d'une entrée à 8 bits connectée à la liaison 543 ;
— détecteur-comparateur de niveau 55, doté d'une entrée à 8 bits connectée à la sortie du transcodeur 51 et d'une entrée à 8 bits connectée à la sortie 543 ;
— détecteur-comparateur de niveau 57, doté d'une entrée à 8 bits, connectée à la sortie du soustracteur 72 (figure 6) et d'une entrée à 8 bits connectée à la liaison 543 ;
— porte ET 58, à trois entrées respectivement connectées aux trois sorties des détecteurs-comparateurs 55, 56 et 57 ;

9

— multiplexeur 59 à deux entrées de validation ou de commande, respectivement connectées à la sortie de la porte ET 58 et à la sortie du détecteur de double parole 90 ; sa sortie est connectée à l'une des entrées de l'additionneur 53.

On rappelle que les mots C sont des mots de codage pseudo-logarithmique. Bien qu'ils ne comportent que 8 bits lorsqu'ils sont délivrés au calculateur 61 (figure 6), la capacité du registre à décalage 40 est de 32 mots (k = 32) de 12 bits afin que les corrections puissent être effectuées avec une précision suffisante. Ces 12 bits comprennent, dans l'ordre des poids décroissants, un bit de signe Sgn, trois bits de numéro de segment E1, E2 et E3 et huit bits de numéro de mantisse M1 à M8. Les études préliminaires ayant montré que l'algorithme de calcul précité converge de façon satisfaisante si les corrections ne portent que sur le bit M5 de la mantisse (bit qui n'est pas retenu dans la formation des produits partiels X · C), le rôle du multiplexeur 59 est seulement, en cas de besoin, de délivrer un bit de valeur convenable dont l'additionneur 53 opère l'addition algébrique audit bit M5. Ce bit de correction est égal à (+ 1) ou (− 1) selon que le signe du produit C · X · R est positif ou négatif. L'entrée 591 du multiplexeur 59 est connectée à cet effet, par des liaisons non représentées, aux liaisons 402 (sortie du registre 40) 312 (entrée du registre 30) et à la voie 20, pour recueillir en permanence les bits de signe correspondants. La sortie 595 du multiplexeur 59 est donc une sortie à trois états, à savoir :

— état zéro si la porte ET 58 ne délivre pas de signal de commande à l'entrée de commande 593,
— état (+ 1) ou (− 1) si la porte 58 délivre un signal de commande.

Ce signal de commande n'est délivré que si les conditions suivantes sont simultanément respectées :

a) le niveau de l'échantillon de parole lointaine (mot X) doit être différent du niveau moyen des k échantillons, sinon la correction est inutile ;
b) ce niveau doit être suffisant afin que la correction permette une adaptation correcte ;
c) ce niveau ne doit pas dépasser la capacité de charge de la transmission MIC, faute de quoi l'échantillon est écrêté et les non-linéarités qui en résultent ne sont pas reproduites par l'annuleur d'écho ;
d) le niveau de l'échantillon de parole proche restituée R ne doit pas être trop élevé ; dans le cas contraire, il s'agirait d'un bruit proche accidentel (intervenant notamment immédiatement après le début de l'initialisation) dont la prise en compte nuirait à la qualité de l'ajustement des coefficients C ;
e) les échantillons de parole lointaine (mots X) doivent être suffisamment décorrélés entre eux, faute de quoi l'algorithme de calcul du signal de compensation d'écho risque de devenir divergent.

Le comparateur-détecteur 55 impose le respect de la condition a). Il ne délivre un signal de validation à la porte 58 que si la valeur absolue |x| du mot de codage x délivré par le transcodeur 51 est supérieure à la valeur moyenne absolue |x̄| délivrée par l'accumulateur-additionneur 54.

Le comparateur-détecteur 56 impose le respect des conditions b) et c). Il ne délivre un signal de validation à la porte 58 que si la valeur moyenne absolue de |x̄| est supérieure à 2 exp(− 7) et inférieure à 2 exp(− 2).

Enfin, le comparateur-détecteur 57 impose le respect des conditions d) et e). Il ne délivre un signal de validation à la porte 58 que si la valeur absolue du rapport |r/x̄| de la valeur des mots de codage linéaire r restituée par le soustracteur 72 (figure 6) à la valeur moyenne x est inférieure à 2 exp(− 1) et supérieure à 2 exp(− 6).

Cependant, l'adaptation des mots de coefficients C risque de se détériorer dans le cas d'une situation de double parole qui se traduit par le fait que les échantillons de parole proche (mots de codage pseudo-logarithmique S) ont un niveau non négligeable par rapport aux échantillons de parole lointaine (mots de codage pseudo-logarithmique X). La solution adoptée par l'invention consiste à diminuer sensiblement le niveau des termes de correction ΔC pendant tout le temps que dure cette situation. Le multiplexeur 59 est pourvu à cet effet d'une deuxième entrée de signaux 591 et d'une deuxième entrée de commande 594. Lorsque cette entrée est validée, l'entrée 592 transmet à la sortie 595 un signal de correction passif ou négatif que l'additionneur 53 ajoute au bit M8 de la mantisse. Le niveau du signal de correction ainsi engendré est donc inférieur de 24 dB à celui du signal engendré par la validation de l'entrée de commande 593.

L'entrée de commande 594 est validée au moyen du détecteur de parole 90 qui comprend un comparateur-détecteur 91 et un circuit de temporisation 92. Le comparateur 91 est muni de deux entrées dont l'une, à 7 bits, est connectée à la liaison de sortie 302 du registre 30 pour prélever les bits de la valeur absolue |X| des mots de codage pseudo-logarithmique X et dont l'autre, également à 7 bits, est connectée à la liaison 20 pour prélever les bits de la valeur absolue |R| des mots de codage pseudo-logarithmique R. Ce comparateur 91 compare en permanence chaque mot |R| au mot de valeur absolue maximale |X(max)| de la séquence des 32 mots |X| les plus récents. Lorsqu'il constate que le niveau correspondant à R est supérieur au quart du niveau correspondant à |X(max)|, c'est-à-dire lorsque le rapport (|X(max)|/R) et inférieur à 12 dB, il délivre un signal logique au circuit de temporisation 92. Si la durée de ce signal logique est supérieure à 100 millisecondes, le circuit 92 délivre, tant que ledit signal logique persiste, un signal de validation à l'entrée 594 du multiplexeur 59.

Cependant, la présence d'un dispositif de pré-ajustement des mots de coefficients C (unité 81, figure 6) amène à reconsidérer l'utilité du détecteur de double parole 90 (figure 8). En fonctionnement normal,

10

**0 054 329**

ce dispositif permet d'annuler quasi-instantanément l'écho apparaissant dès la mise en communication. Il devient donc possible de réduire la valeur absolue des termes correcteurs ΔC délivrés par le multiplexeur 59 afin d'ajuster plus finement la valeur des mots de coefficients C. La stabilité de l'annuleur d'écho en présence de double parole devient telle que ledit détecteur 90 devient alors inutile. Cette réduction de valeur s'obtient en connectant le multiplexeur 59 à l'additionneur 53 de telle sorte que la correction ΔC porte sur le bit de mantisse M7 des mots de codage C et non plus sur le bit M5 (affaiblissement de 12 dB). Le détecteur de double parole est alors supprimé ainsi que les entrées 592 et 594 du multiplexeur 59.

Des essais réalisés au moyen d'une maquette de faisabilité ont permis de comparer les performances des deux formes de réalisation d'annuleur d'écho que l'on vient de décrire, à savoir :

— annuleur A : muni d'un détecteur de double parole et dans lequel la correction ΔC porte sur le bit M5 des mots C en l'absence de double parole et sur le bit M8 en situation de double parole ;

— annuleur B : non muni d'un détecteur de double parole et dans lequel la correction ΔC porte en toute occurrence sur le bit M7 des mots C.

On appelle F l'affaiblissement d'adaptation totale, c'est-à-dire le rapport P(X)/P(E) de la puissance moyenne P(X) des signaux acheminés par la voie de réception (voir VR des figures 1 et 2) à la puissance moyenne P(E) de l'écho engendré sur la voie d'émission VE.

Avec l'annuleur A, F est supérieur à 37 dB pour tout chemin d'écho rencontré ordinairement en exploitation et tant que P(X) demeure supérieur ou égal à − 27 dBmo. En dessous de cette limite, F décroît linéairement jusqu'à ce que l'écho devienne noyé dans le bruit engendré par le codec.

Avec l'annuleur B, F est supérieur à 40 dB tant que P(X) demeure supérieur ou égal à − 20 dBmo. En dessous de cette limite, F décroît de façon quasi linéaire.

La vitesse de convergence des coefficients C est dans les deux cas tout à fait satisfaisante.

## Revendications

1. Annuleur d'écho pour liaison téléphonique comportant deux voies numériques (10, 20), pour signaux MIC obtenus selon une loi de codage pseudo-logarithmique, cet annuleur d'écho étant inséré dans ladite liaison à proximité d'une unité de raccordement d'au moins un abonné dans le but d'annuler substantiellement, dans la voie d'émission (20) acheminant les mots de codage pseudo-logarithmique S de parole proche délivrés par cette unité de raccordement, l'effet de l'écho des mots de codage pseudo-logarithmique X de parole lointaine délivrés à ladite unité par la voie de réception (10), cet annuleur d'écho étant du genre comportant :

— un premier registre à décalage (30) d'une capacité de (k + 1) mots de codage, bouclé sur lui-même et dont l'entrée est connectée à la voie de réception pour recevoir à chaque instant d'échantillonnage un mot de codage pseudo-logarithmique X, la vitesse de circulation des mots dans le registre étant telle qu'il fournit entre deux instants d'échantillonnage, consécutifs, la séquence des k plus récents mots de codage X,

— un deuxième registre à décalage (40) d'une capacité de k mots de codage, bouclé sur lui-même, fonctionnant en phase avec le premier registre et dans lequel circule une séquence de k mots C de codage de coefficients,

— des moyens de calcul numérique de convolution (60) agencés pour fournir, à chaque instant d'échantillonnage, un mot de codage linéaire de compensation d'écho ȳ obtenu par sommation de k mots dont chacun résulte d'une opération combinant un mot X et un mot C délivrés simultanément par le premier et le deuxième registre à décalage,

— des moyens de calcul numérique de soustraction (70) comprenant un soustracteur (72) dont une entrée est connectée à l'unité de raccordement par l'intermédiaire d'un transcodeur pseudo-logarithmique/linéaire (71), dont l'entrée de correction est connectée à la sortie desdits moyens de calcul numérique de convolution et dont enfin la sortie est connectée à la voie émission par l'intermédiaire d'un transcodeur linéaire/pseudo-logarithmique (73),

— des moyens de calcul numérique de corrélation (50) munis d'entrées respectivement connectées à la sortie du premier et du deuxième registre à décalage et à la sortie dudit soustracteur et muni d'une sortie connectée à l'entrée du deuxième registre à décalage pour modifier la valeur des mots C circulant dans ce deuxième registre en fonction de critères de comparaison des mots fournis respectivement par ledit premier registre et par ledit soustracteur, caractérisé en ce que des moyens (11, 80) sont prévus et mis en œuvre lors de l'établissement d'une communication impliquant l'unité de raccordement pour initialiser les mots de codage pseudo-logarithmique C stockés dans le deuxième registre à décalage (40), en appliquant à la voie de réception (10) une impulsion d'un niveau prédéterminé et en dirigeant à l'entrée de ce deuxième registre les k premiers mots d'écho en résultant en provenance de l'unité de raccordement, lesdits moyens de calcul numérique de corrélation (50) étant agencés pour modifier ensuite lesdits mots C par un terme de correction portant sur un bit de mantisse de ces mots C ayant un poids suffisamment faible pour que la stabilité de l'annuleur d'écho soit assurée dans une circonstance de double parole, le deuxième registre à décalage (40) étant prévu pour stocker des mots C ayant des bits de mantisse allant jusqu'au bit de correction.

2. Annuleur d'écho selon la revendication 1, caractérisé en ce que, pour des mots de coefficients C utilisés dans les moyens de calcul de convolution (60) ayant une mantisse à quatre bits, il est prévu que la correction des mots C stockés dans le deuxième registre à décalage (40) soit effectuée sur le septième bit de la mantisse.

**Claims**

1. An echo canceller for a telephone circuit having two digital paths (10, 20) for PCM signals obtained in accordance with a pseudo-logarithmic encoding law, said echo canceller being arranged in said telephone circuit in the proximity of a line interface unit for at least one subscriber and having for its object to cancel substantially, in the transmit path (20) conveying the pseudo-logarithmic code words S of a near-end speech signal produced by said interface unit, the echo effect of the pseudo-logarithmic code words X of a far-end speech signal conveyed to said interface unit *via* the receive path (10), the echo canceller being of the type comprising :
— a first shift register (30) having a capacity of (k + 1) code words and having its output connected to its input, said input being connected to the receive path for receiving a pseudo-logarithmic code word X at each sampling instant, the circulation rate of the code words in this register being such that it produces the sequence of the k most recent code words X between two consecutive sampling instants,
— a second shift register (40) having a capacity fo k code words and having its output connected to its input, this second register operating in phase with the first register, a sequence of k coefficient code words C circulating in this second register,
— digital convolution calculation means (60) arranged to produce, at each sampling instant, a linear echo cancellation code word $\bar{y}$ obtained by summing k words, each of which words results from an operation in which a word X and a word C supplied simultaneously by the first and the second shift registers are combined,
— digital subtraction calculation means (70) comprising a subtractor (72), one input of which is connected to the interface unit *via* a pseudo-logarithmic-to-linear code converter (71), a correction input of the subtractor being connected to the output of said digital convolution calculation means and, finally, the output of the subtractor being connected to the transmit path *via* a linear-to-pseudo-logarithmic code converter (73),
— digital correlation calculation means (50) having inputs connected to the first and second shift registers, respectively, and to the output of said subtractor and having an output connected to the input of the second shift register for modifying the value of the words C circulating in this second register as a function of comparison criteria for the words supplied by said first register and said subtractor, respectively, characterized in that the means (11, 80) are provided and made operative upon the establishment of a communication involving the interface unit for initializing the pseudo-logarithmic code words C stored in the second shift register (40) by applying to the receive path (10) an impulse of ε predetermined level and by conveying to the input of this second register the resulting k first echo words originating from the interface unit, said digital correlation calculation means (50) being arranged for thereafter modifying said words C by a correction term acting on a mantissa bit of these words C and having a sufficiently low significance to ensure the stability of the echo canceller for a double-talk situation, said second shift register (40) being provided for storing the words C having mantissa bits extending just up to the correction bit.
2. An echo canceller as claimed in Claim 1, characterized in that for coefficient words C used in the convolution calculation means (60) having a four-bit mantissa, measures have been taken to provide that the correction of the words C stored in the second shift register (40) is effected on the seventh bit of the mantissa.

**Patentansprüche**

1. Echokompensator für eine Fernsprechverbindung mit zwei digitalen Strecken (10, 20) für nach einem pseudo-logarithmischen Codierungsgesetz erhaltene PCM-Signale, wobei dieser Echokompensator in der genannten Verbindung in der Nähe einer Anschlusseinheit mindestens eines Teilnehmers dazu vorgesehen ist, dass in der Sendestrecke (20) zum Befördern der pseudo-logarithmischen Codeworte S eines Nah-Sprechsignals, die von dieser Anschlusseinheit geliefert werden, den Echoeffekt der pseudo-logarithmischen Codeworte X eines Fern-Sprechsignals, die der genannten Einheit über die Empfangsstrecke (10) zugeführt werden, nahezu ausgeglichen wird, wobei dieser Echokompensator von dem Typ ist, der die folgenden Elemente aufweist :
— ein erstes Umlaufschieberegister (30) mit einer Kapazität von (k + 1) Codeworten, dessen Eingang an die Empfangsstrecke angeschlossen ist zum jedem Abtastzeitpunkt Empfangen eines pseudo-logarithmischen Codewortes X, wobei die Umlaufgeschwindigkeit der Worte in dem Register derart ist, dass dieses Register zwischen zwei aufeinander folgenden Abtastzeitpunkten die Reihe der k neuesten Codeworte X liefert,

— ein zweites Umlaufscheiberegister (40) mit einer Kapazität von k Codeworten, die zu dem ersten Register phasengleich arbeitet und wobei eine Reihe von k Koeffizientencodeworten C umläuft,

— digitale Konvolutionsberechnungsmittel (60), die dazu eingerichtet sind, zu jedem Abtastzeitpunkt ein lineares Echokompensationscodewort ȳ zu liefern, das durch Summierung von k Worten erhalten worden ist, von denen jedes aus einer Bearbeitung zum Kombinieren eines Wortes X und eines Wortes C, die von dem ersten und dem zweiten Schieberegister gleichzeitig abgegeben werden, herrührt,

— digitale Subtrahiermittel (70), die einen Subtrahierer (72) aufweisen, von dem ein Eingang über einen pseudo-logarithmischen/linearen Transcoder (71) an die Anschlusseinheit angeschlossen ist, von dem ein Korrektureingang an den Ausgang der genannten digitalen Konvolutionsberechnungsmittel angeschlossen ist und von dem zum Schluss der Ausgang über einen linearen/pseudo-logarithmischen Transcoder (73) an die Sendestrecke angeschlossen ist,

— digitale Korrelationsberechnungsmittel (50) mit Eingängen, die an den Ausgang des ersten bzw. zweiten Schieberegisters sowie an den Ausgang des genannten Subtrahierers angeschlossen sind und mit einem Ausgang, der an den Eingang des zweiten Schieberegisters zum Ändern des Wertes der in dem zweiten Register umlaufenden Worte C als Funktion der Vergleichskriterien für die Worte, die von dem ersten Schieberegister bzw. von dem genannten Subtrahierer geliefert werden, angeschlossen ist, dadurch gekennzeichnet dass Mittel (11, 80) vorgesehen sind, die bei der Herstellung einer Verbindung, an der die Anschlusseinheit beteiligt ist, zum Initialisieren der in dem zweiten Schieberegister (40) gespeicherten pseudo-logarithmischen Codeworte C wirksam sind, indem der Empfangsstrecke (10) ein Impuls mit einem vorbestimmten Pegel zugeführt wird und indem die k ersten sich daraus ergebenden von der Anschlusseinheit herrührenden Echoworte dem Eingang dieses zweiten Registers zugeführt werden, wobei die genannten digitalen Korrelatinsberechnungsmittel (50) dazu eingerichtet sind, daraufhin die genannten Worte C durch einen Korrekturterm zu ändern, der auf ein Mantissenbit dieser Worte C mit einem Gewicht einwirkt, das klein genug ist um die Stabilität des Echokompensators in Doppelsprachumständen zu gewährleisten, wobei das zweite Schieberegister (40) dazu eingerichtet ist, die Worte C mit einer bis an das Korrekturbit reichenden Anzahl Mantissenbits zu speichern.

2. Echokompensator nach Anspruch 1, dadurch gekennzeichnet, dass für in den Konvolutionsberechnungsmitteln (60) verwendete Koeffizientenworte C mit einer Mantisse von vier Bits die Korrektur der in dem zweiten Schieberegister (40) gespeicherten Worte C an dem siebenten bit der Mantisse durchgeführt wird.

FIG.1

FIG.2

FIG.3

### FIG.4

| E | LIN B 0 | LIN B 1 | 2 | 3 | 4 | 5 | 6 | 7 | 8 | 9 | 10 | 11 | 12 | A-Law B 0 | A-Law B 1 | 2 | 3 | 4 | 5 | 6 | 7 | Q |
|---|---|---|---|---|---|---|---|---|---|---|---|---|---|---|---|---|---|---|---|---|---|---|
| 7 | 0;1 | 1 | X | Y | Z | T | 1 | 0 | 0 | 0 | 0 | 0 | 0 | 0;1 | 1 | 1 | 1 | X | Y | Z | T | 1024 — 2047 |
| 6 |  | 0 | 1 | X | Y | Z | T | 1 | 0 | 0 | 0 | 0 | 0 |  | 1 | 1 | 0 | X | Y | Z | T | 512 — 1023 |
| 5 |  | 0 | 0 | 1 | X | Y | Z | T | 1 | 0 | 0 | 0 | 0 |  | 1 | 0 | 1 | X | Y | Z | T | 256 — 511 |
| 4 |  | 0 | 0 | 0 | 1 | X | Y | Z | T | 1 | 0 | 0 | 0 |  | 1 | 0 | 0 | X | Y | Z | T | 128 — 255 |
| 3 |  | 0 | 0 | 0 | 0 | 1 | X | Y | Z | T | 1 | 0 | 0 |  | 0 | 1 | 1 | X | Y | Z | T | 64 — 127 |
| 2 |  | 0 | 0 | 0 | 0 | 0 | 1 | X | Y | Z | T | 1 | 0 |  | 0 | 1 | 0 | X | Y | Z | T | 32 — 63 |
| 1 |  | 0 | 0 | 0 | 0 | 0 | 0 | 1 | X | Y | Z | T | 1 |  | 0 | 0 | 1 | X | Y | Z | T | 16 — 31 |
| 0 |  | 0 | 0 | 0 | 0 | 0 | 0 | 0 | X | Y | Z | T | 1 |  | 0 | 0 | 0 | X | Y | Z | T | 0 — 15 |

FIG.4

u (62 FIG.7)

| E(U) | MSB | | | | | | B12 | | | LSB |
|---|---|---|---|---|---|---|---|---|---|---|
| 14 | A B C | D E F 1 | 0 0 0 0 | 0 0 0 0 |
| 13 | 0 A B | C D E F | 1 0 0 0 | 0 0 0 0 |
| 12 | 0 0 A | B C D E | F 1 0 0 | 0 0 0 0 |
| 11 | 0 0 0 | A B C D | E F 1 0 | 0 0 0 0 |
| 6 | 0 0 0 | 0 0 0 0 | 0 A B C | D E F 1 |
| 5 | 0 0 0 | 0 0 0 0 | 0 0 A B | C D E F |
| 4 | 0 0 0 | 0 0 0 0 | 0 0 0 A | B C D E |
| 3 | 0 0 0 | 0 0 0 0 | 0 0 0 0 | A B C D |
| 2 | 0 0 0 | 0 0 0 0 | 0 0 0 0 | 0 A B C |

FIG.5

**0 054 329**

FIG.6

4

FIG. 7

FIG.8